# FASCICULE DE BREVET EUROPEEN

(11) **EP 0 645 303 B1**
(45) Date de publication et mention de la délivrance du brevet: **21.01.1998**
(21) Numéro de dépôt: 94402122.9
(22) Date de dépôt: 23.09.1994
(51) Int. Cl.: B64D 9/00, B65D 88/14

(54) **Procédé de réalisation d'un agencement de référence en vue du positionnement d'éléments auxiliaires sur un contenant de grande taille et contenant équipé en conséquence**
Verfahren zur Realisation einer Bauweise im Hinblick auf das Anbringen von Hilfselementen an einem Behälter von grosser Abmessung und damit hergestellter Behälter
Method for realisation of a construction with regard to positioning of auxiliary elements on a container of great dimensions and container equipped therewith

(30) Priorité: 23.09.1993 FR 9311337
(43) Date de publication de la demande: 29.03.1995
(73) Titulaire: ALCATEL ALSTHOM COMPAGNIE GENERALE D'ELECTRICITE, 75008 Paris (FR)
(72) Inventeur: Sevin, Michel, F-84240 La Tour d'Aigues (FR)
(74) Mandataire: Schaub, Bernard

(56) Documents cités:
- FR-A- 2 487 777

## Description

L'invention concerne un procédé de réalisation d'un agencement de référence permanent sur un contenant, de type caisse, de grande taille et notamment aérotransportable, tel qu'un abri technique, en vue du positionnement précis d'éléments auxiliaires externes, tels que des longerons pour système automatique d'arrimage, sur ce contenant.

L'invention concerne aussi les contenants équipés d'un agencement de référence réalisé selon ce procédé.

Il est connu de rassembler des unités d'intervention regroupant tout ou partie de l'ensemble des matériels nécessaires à la mise en oeuvre d'un service donné, par exemple de télécommunications, dans un contenant de type abri technique transportable, classiquement réalisé sous la forme d'une caisse de grande taille où il est possible de faire exploiter le matériel par le personnel destiné à le mettre en oeuvre.

Les caisses de ces abris techniques sont usuellement réalisées soit par assemblage de panneaux fixés les uns aux autres au moyen d'éléments d'assemblage légers, par exemple de type cornière, soit encore au moyen de panneaux montés sur une ossature usuellement métallique à des fins de renforcement. Il existe des normalisations, notamment dimensionnelles, concernant ce type de caisse formant abri technique, de manière à ce qu'il soit possible de transporter rapidement en divers endroits du monde par divers moyens, si besoin est, les divers matériels qu'ils sont susceptibles d'abriter, ces matériels étant le plus souvent prévus pour permettre de réaliser des opérations ponctuelles, par exemple temporaire et/ou de secours.

Dans la mesure où ces abris sont susceptibles d'être transportés par voie aérienne, il a été prévu des systèmes d'arrimage automatique permettant de les immobiliser facilement dans les avions transporteurs. Ce système d'arrimage prévoit que chaque abri soit muni de longerons longitudinaux d'arrimage en bas de caisse sur deux côtés opposés. La position respective des longerons disposés de part et d'autre d'une caisse, leur planéité et la position de certains de leurs traits caractéristiques sont fixées par normalisation et les tolérances de positionnement prévues sont notablement plus sévères que celles qui sont admises pour la réalisation des caisses d'abri, dans la mesure où rien d'autre au niveau de ces caisses n'implique une telle sévérité.

Il est donc actuellement coûteux de réaliser des caisses d'abri technique en respectant les normes prévues pour qu'elles puissent être aérotransportées dans des conditions impliquant leur arrimage automatique et ce d'autant plus que les accélérations susceptibles de se produire avec ce type de transport peuvent faire subir des efforts très importants aux structures des caisses auxquelles les longerons d'arrimage sont fixés.

L'invention propose donc un procédé de réalisation d'un agencement de référence destiné à permettre le positionnement précis d'éléments auxiliaires externes, tels que des longerons d'arrimage, sur un contenant de type caisse de grande taille, tel qu'un abri technique aérotransportable, notamment lorsque les tolérances de positionnement requises sont plus sévères que celles prévues pour la réalisation du contenant. Il est applicable tant sur les caisses à armature que sur celles sans armature et n'interfère pas avec la fabrication des caisses proprement dite.

Selon l'invention, le procédé prévoit:
- le positionnement relatif précis, sur un dispositif de type marbre, d'éléments profilés rigides d'interface destinés à venir se fixer sur la caisse pour recevoir les éléments auxiliaires externes de part et d'autre de la caisse, ce positionnement sur le dispositif de type marbre étant choisi tel qu'il assure un positionnement ultérieur des éléments auxiliaires à supporter qui soit selon les normes de positionnement relatif fixées pour ces éléments auxiliaires,
- la mise en place du contenant entre les éléments profilés maintenus, sur le dispositif de type marbre, dans la position précise préalablement donnée,
- le coulage d'un produit de fixation, telle une résine polymérisante, entre le contenant et chaque élément profilé,
- la fixation définitive des profilés sur le contenant par des moyens mécaniques d'ancrage, après durcissement du produit de fixation.

L'invention propose aussi un contenant, de type caisse de grande taille, tel qu'un abri technique, notamment aérotransportable, muni d'un agencement de référence permanent en vue du positionnement précis d'éléments auxiliaires externes, notamment amovibles, sur ce contenant susceptible d'être réalisé par le procédé évoqué ci-dessus.

Selon l'invention ce contenant porte des éléments profilés rigides d'interface, destinés à permettre la fixation des éléments auxiliaires, ces profilés étant assujettis sur ce contenant par, d'une part, une couche de produit de fixation coulée entre chacun de ces profilés et le contenant et par, d'autre part, des moyens mécaniques d'ancrage.

L'invention, ses caractéristiques et ses avantages sont précisés dans la description qui suit en liaison avec les figures évoquées ci-dessous.
La figure 1 présente une vue de côté d'un contenant équipé d'éléments auxiliaires externes, de type longeron d'arrimage, montés sur des profilés d'interface selon l'invention;
La figure 2 présente une vue de détail précisant le montage d'un profilé d'interface et d'un élément auxiliaire sur un contenant.
La figure 3 présente une vue d'un exemple d'élément auxiliaire, ici de type longeron d'arrimage.
La figure 4 présente une vue de dessus du contenant équipé montré en figure 1.

Le procédé de réalisation selon l'invention concerne les contenants, de type caisse, de grande taille, en particulier ceux qui sont destinés à constituer des abris techniques où il est possible de faire exploiter un matériel usuellement affecté à un service donné par le personnel chargé de sa mise en oeuvre, comme déjà indiqué plus haut.

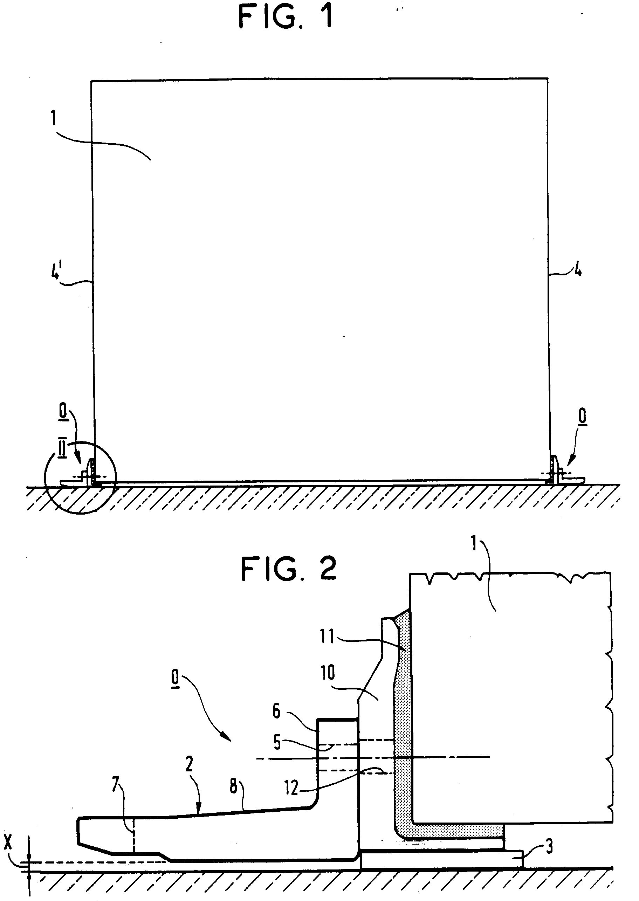

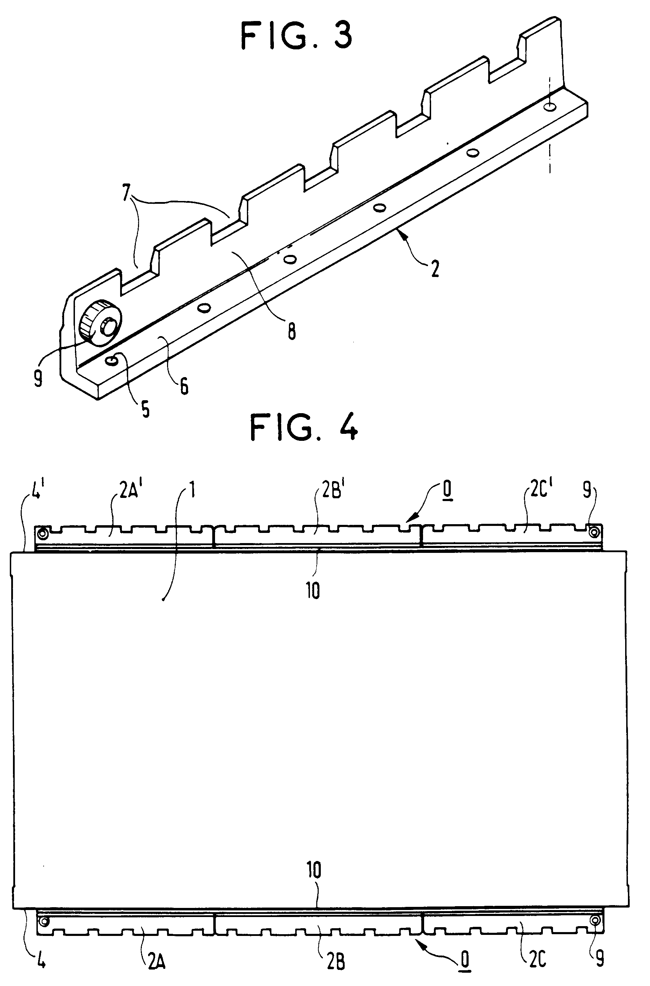

Un tel contenant est présenté en vue de côté sur la figure 1 et en vue de dessus sur la figure 4, il a une forme rectangulaire et il est ici supposé transportable notamment par voie aérienne. Il est donc prévu qu'il porte des éléments auxiliaires externes 2 qui sont alors prévus pour permettre son arrimage pendant le transport.

Bien entendu, il est envisageable d'exploiter le procédé selon l'invention pour d'autres éléments auxiliaires que ceux évoqués ici, lorsque ces éléments nécessitent un positionnement les uns par rapport aux autres qui implique des tolérances plus sévères que celles prévues lors de la réalisation du contenant lui-même.

Ce contenant 1 est supposé composé de panneaux assemblés entre eux comme indiqué plus haut, c'est-à-dire fixés les uns aux autres ou encore montés sur une ossature de renforcement. Des patins longitudinaux, non représentés, garnissent le dessous du contenant et permettent son déplacement par glissement.

Dans l'exemple envisagé ici, les éléments auxiliaires externes 2 sont amovibles et sont du type longeron d'arrimage, un exemple d'un tel longeron étant montré en figure. Ces longerons, réalisés par exemple en aluminium, sont destinés à venir se positionner au bas de la caisse que forme le contenant 1 sur les grands côtés opposés 4 et 4' de cette caisse. Chaque longeron a par exemple une section transversale en L et comporte des trous de fixation 5 répartis sur la longueur d'une de ses ailes 6 pour sa fixation au contenant 1. Chaque longeron comporte aussi des encoches 7 ménagées dans la bordure de son autre aile 8 pour l'arrimage et éventuellement un galet 9 pour faciliter la mise en place du contenant qui le porte, avant arrimage.

Dans la réalisation présentée en figure 4 où la caisse est supposée de grande longueur, des longerons 2A, 2A', 2B, 2B', 2C, 2C' symétriques par rapport à l'axe longitudinal du contenant sont prévus montés de chaque côté de cette caisse.

De manière connue, l'arrimage automatique d'une telle caisse à l'intérieur d'un avion, au moyen des longerons qu'elle porte, implique que l'ensemble formé par ces longerons soit réalisé avec des tolérances de positionnement nettement plus sévères que celles normalement prévues et aisément obtenues pour la réalisation de la caisse.

Selon l'invention, il est donc prévu de mettre en oeuvre un agencement de référence constitué par des éléments profilés rigides 10 qui sont destinés à servir d'interface entre la caisse et les longerons. Les profilés 10 d'un agencement de référence sont associés de manière à présenter un positionnement relatif les uns par rapport aux autres qui permette d'obtenir un positionnement correspondant, avec la précision requise, des longerons fixés sur eux.

Dans une forme de réalisation, ces profilés 10 sont réalisés en aluminium et ils ont une section transversale en L de manière à pouvoir venir se positionner au niveau d'une arête latérale inférieure de caisse, ainsi qu'on le voit, au niveau du détail 0 présenté sur les figures 1 et 2. Ils sont disposés pour tenir compte du fait que les éléments 10 doivent être positionnés avec précision par rapport à la face de référence que constitue le dessous des patins pour le contenant.

Selon l'invention on positionne avec précision ces profilés 10 les uns par rapport aux autres, sur un dispositif de type marbre, tel que ceux qui sont utilisés dans les ateliers de mécanique, de manière qu'ils soient immobilisés dans la position précise qu'ils doivent occuper pour obtenir que les longerons qu'ils seront amenés à porter puissent eux aussi être positionnés les uns par rapport aux autres selon les prescriptions requises et avec la précision désirée. Ceci conduit aussi à ce que les éléments 10 soient placés en surélévation par rapport au marbre, par exemple à l'aide de cales, telle 3, d'une hauteur "h" donnée, comme montré sur la figure 2.

Lorsque les profilés 10 prévus pour la caisse formant un contenant 1 sont immobilisés en position voulue les uns par rapport aux autres, il est prévu de venir placer la caisse dans une position pratiquement identique à celle qu'elle doit occuper par rapport aux profilés prévus pour elle.

seul est prévu un faible espace entre ces profilés et cette caisse par suite du choix fait pour les dimensions de caisse.

Selon l'invention, on vient couler un produit de fixation 11 entre chaque profilé 10 et la caisse de manière à obtenir un gel de la position des divers profilés 10 sur la caisse du contenant 1. Le produit de fixation 11 est par exemple une résine polymérisante qui durcit à la température ambiante après coulage.

Le positionnement précis des profilés 10 les uns par rapport aux autres est conservé et il est alors assuré par leur collage sur la caisse. Une fixation complémentaire de ces profilés est alors réalisée par usage de moyens mécaniques d'ancrage usuels. Dans l'exemple envisagé cette fixation est assurée au moyen de rivets, non représentés, venant se positionner entre les trous, tel 12, des profilés dont le positionnement correspond à celui des trous 5 ménagés dans les longerons 2 pour leur fixation au contenant, soit donc aux profilés 10 dans le cas présent.

Il est donc possible d'obtenir une structure résistante et précise au moyen des profilés 10, éventuellement en liaison avec des profilés de renfort complémentaire et/ou de l'éventuelle ossature portant les parois de la caisse, alors que la précision de réalisation de la caisse elle-même ne correspond pas aux prescriptions requises par le système d'arrimage automatique, dans l'exemple d'application choisi.

## Revendications

1. Procédé de réalisation d'un agencement de référence permanent sur un contenant (1), de type caisse de grande taille, tel qu'un abri technique, en vue du positionnement précis d'éléments auxiliaires externes sur ce contenant, caractérisé en ce qu'il prévoit:
- le positionnement relatif précis, sur un dispositif de type marbre, d'éléments profilés rigides d'interface (10) destinés à venir se fixer sur la caisse pour recevoir les éléments auxiliaires externes (2) de part et d'autre de la caisse, ce positionnement sur le dispositif de type marbre étant choisi tel qu'il assure un positionnement ultérieur des éléments auxiliaires à supporter qui soit selon les normes de positionnement relatif fixées pour ces éléments auxiliaires,
- la mise en place du contenant entre les éléments profilés maintenus, sur le dispositif de type marbre, dans la position précise préalablement donnée,
- le coulage d'un produit de fixation (11), telle une résine polymérisante, entre le contenant et chaque élément profilé,
- la fixation définitive des profilés sur le contenant par des moyens mécaniques d'ancrage, après durcissement du produit de fixation.

2. Contenant (1), de type caisse de grande taille, tel qu'un abri technique, notamment aérotransportable, muni d'un agencement de référence permanent en vue du positionnement précis d'éléments auxiliaires externes, notamment amovibles, sur ce contenant, caractérisé en ce qu'il est susceptible d'être réalisé par le procédé objet de la revendication 1, et, en ce qu'il porte des éléments profilés rigides d'interface (10), pour la fixation des éléments auxiliaires (2), qui sont assujettis sur ce contenant par, d'une part, une couche de produit de fixation (11) coulée entre chacun de ces profilés et le contenant et par, d'autre part, des moyens mécaniques d'ancrage.

3. Contenant (1), selon la revendication 2, caractérisé en ce que les éléments auxiliaires externes (2) sont des longerons d'arrimage pour système d'arrimage automatique, prévus pour être fixés de manière amovible sur des éléments profilés rigides d'interface (10) qui sont définitivement fixés sur des arêtes latérales opposées du bas de la caisse que forme le contenant d'une part par une couche de produit de fixation coulée entre chacun de ces profilés et le contenant et d'autre part par des moyens mécaniques d'ancrage.

4. Contenant (1) selon au moins l'une des revendications 2, 3 caractérisé en ce que le produit de fixation (11) est de type résine polymérisante durcissable à température ambiante, les moyens d'ancrage des profilés (10) au contenant étant de type rivet.

## Claims

1. A method of making a permanent reference facility on a large box-type container (1), such as an operating cabin, for the purpose of accurately positioning external auxiliary elements on the container, said method being characterized in that it involves:
accurately positioning rigid shaped-section interface members (10) relative to one another on a surface-plate type slab, which members are designed to be fixed to the box to receive the external auxiliary elements (2) on either side of the box, their positioning on the surface-plate slab being chosen such that it guarantees that the subsequent positioning of the auxiliary elements to be supported complies with the relative-positioning standards laid down for the auxiliary elements;
putting the container in place between the shaped-section members held in the above-defined precise positions on the surface-plate type slab;
pouring a fixing compound (11), such as a polymerizable resin, between the container and each shaped-section member; and
fixing the shaped-section members permanently on the container by mechanical fastening means, after the fixing compound has set.

2. A container (1) of the large box type such as an operating cabin, in particular transportable by air, equipped with a permanent reference facility for the purpose of accurately positioning external auxiliary elements, in particular removable elements, on the container, said container being characterized in that it is suitable for being made by implementing the method defined in claim 1, and in that it carries rigid shaped-section interface members (10) for fixing to the auxiliary elements (2), which interface members are secured to the container firstly by a layer of fixing compound (11) poured between each of the shaped-section members and the container, and secondly by mechanical fastening means.

3. A container (1) according to claim 2, characterized in that the external auxiliary elements (2) are stowing solebars for an automatic stowing system, which solebars are organized to be fixed in removable manner on rigid shaped-section interface members (10) which are fixed permanently to opposite edges of the bottom of the box formed by the container firstly by a layer of fixing compound poured between each of the shaped-section members and the container, and secondly by mechanical fastening means.

4. A container (1) according to claim 2 or 3, characterized in that the fixing compound (11) is of the polymerizable resin type that is settable at ambient temperature, the means for fastening the shaped-section members (10) to the container being of the rivet type.

## Patentansprüche

1. Verfahren zum Ausbilden einer dauerkaften Bezugsanordnung an einem Behälter (1) in Art einer Kiste mit großer Abmessung, wie etwa einem technischen Schutzraum, für die präzise Positionierung von externen Hilfselementen an diesem Behälter, **dadurch gekennzeichnet**, daß es vorsieht:
- die genaue Relativpositionierung, auf einer Vorrichtung in Art einer Grundplatte, von starren Übergangsprofilelementen (10), die vorgesehen sind, um an der Kiste befestigt zu werden, um externe Hilfselemente (2) auf beiden Seiten der Kiste aufzunehmen, wobei die Positionierung auf der grundplattenartigen Vorrichtung so gewählt ist, daß sie eine spätere Positionierung der zu tragenden Hilfselemente sicherstellt, die den für diese Hilfselemente festgelegten Normen der relativen Positionierung entspricht,
- die Anordnung des Behälters zwischen den gehaltenen Profilelementen auf der grundplattenartigen Vorrichtung in der vorgegebenen genauen Position,
- das Gießen eines Befestigungserzeugnisses (11), wie etwa eines polymerisierenden Harzes, zwischen den Behälter und jedes Profilelement,
- die definitive Befestigung der Profile an dem Behälter durch mechanische Verankerungsmittel nach Härten des Befestigungserzeugnisses.

2. Behälter (1) in Art einer Kiste mit großer Abmessung, wie etwa ein insbesondere lufttransportgeeigneter technischer Schutzraum, versehen mit einer dauerhaften Bezugsanordnung im Hinblick auf die genaue Positionierung von externen, insbesondere abnehmbaren Hilfselementen an dem Behälter, dadurch gekennzeichnet, daß er geeignet ist, durch das verfahren nach Anspruch 1 hergestellt zu werden und daß er starre Übergangsprofilelemente (10) für die Befestigung der Hilfselemente (2) trägt, die an dem Behälter einerseits durch eine Schicht eines zwischen jedes der Profile und den Behälter gegossenen Befestigungserzeugnisses und andererseits durch mechanische Verankerungsmittel befestigt sind.

3. Behälter (1) nach Anspruch 2 dadurch gekennzeichnet, daß die externen Hilfselemente (2) Verladeläufer für ein automatisches Verladesystem sind, die vorgesehen sind, um abnehmbar an starren Übergangsprofilelementen (10) befestigt zu werden, die definitiv an gegenüberliegenden Seitenkanten unten an der den Behälter bildenden Kiste einerseits durch eine Schicht von zwischen jedes der Profile und den Behälter gegossenem Befestigungserzeugnis und andererseits durch mechanische Verankerungsmittel befestigt sind.

4. Behälter (1) nach wenigstens einem der Ansprüche 2 oder 3, dadurch gekennzeichnet, daß das Befestigungserzeugnis (11) in Art eines bei Umgebungstemperatur härtenden polymerisierenden Harzes ist, und daß die Verankerungsmittel der Profile (10) am Behälter nietenartig sind.
